# DEMANDE DE BREVET EUROPEEN

(11) **EP 0 961 387 A1**
(43) Date de publication de la demande: **01.12.1999**
(21) Numéro de dépôt: 99401232.6
(22) Date de dépôt: 21.05.1999
(51) Int. Cl.: H02K 5/24, F16F 15/08

(54) **Système de suspension d'un stator de machine électrique tournante**

(30) Priorité: 25.05.1998 FR 9806542
(71) Demandeur: HUTCHINSON, 75008 Paris (FR)
(72) Inventeur: Jomaa, Mehdi, 92300 Levallois-Perret (FR); Runfola, Marc, 92130 Issy les Moulineaux (FR)
(74) Mandataire: Jacquard, Philippe Jean-Luc

(57) **Abrégé**

Système de suspension d'un stator de machine électrique tournante, cette machine comprenant un rotor (R) et un stator (S) coaxiaux qui délimitent entre eux un entrefer (E), et une carcasse (C) à laquelle est suspendu le stator (S), caractérisé en ce que le système de suspension comprend plusieurs biellettes (10), chaque biellette (10) comprenant au moins un élément élastique (17) qui présente une raideur tangentielle importante suivant un axe (Y-Y) tangent au stator (S), et une faible raideur radiale autour d'un axe (X-X) qui est parallèle à une génératrice du stator (S).

## Description

La présente invention concerne un système de suspension d'un stator de machine électrique tournante, cette machine comprenant un rotor et un stator coaxiaux délimitant entre eux un entrefer, et une carcasse à laquelle est suspendue le stator.

D'une manière générale, le fonctionnement d'une machine électrique tournante donne naissance à des bruits et à des vibrations qui résultent notamment de la transmission d'efforts dynamiques du stator à la carcasse dans laquelle il est monté. Ces nuisances, notamment d'origine électromagnétique, sont transmises par l'intermédiaire des points d'accrochage du stator à la carcasse dont les parois jouent un rôle amplificateur de ces bruits et vibrations.

En outre, le stator produit des efforts statiques au niveau de ses points d'accrochage à la carcasse. Ces efforts statiques résultent notamment du poids propre du stator, et d'une attraction magnétique statique entre le rotor et le stator. Ces efforts statiques sont de nature à modifier l'entrefer entre le stator et le rotor, ce qui peut entraîner des disfonctionnements de la machine.

Le but de l'Invention est de concevoir un système de suspension du stator à la carcasse d'une machine électrique tournante, qui soit capable de filtrer les bruits et les vibrations engendrés au cours du fonctionnement de la machine d'une part, et de reprendre les efforts statiques au niveau des points d'accrochage du stator à la carcasse pour maintenir un entrefer constant entre le stator et le rotor d'autre part.

A cet effet, l'Invention propose un système de suspension d'un stator de machine électrique tournante, cette machine comprenant un rotor et un stator coaxiaux délimitant entre eux un entrefer, et une carcasse à laquelle est suspendu le stator, caractérisé en ce que le système de suspension est constitué de plusieurs biellettes, chaque biellette comprenant au moins un élément élastique qui présente une raideur tangentielle importante suivant un axe Y-Y tangentiel au stator, et une faible raideur radiale autour d'un axe X-X qui s'étend parallèlement à une génératrice du stator.

D'une manière générale chaque biellette comprend au moins deux articulations reliées entre elles par une liaison rigide et qui sont respectivement fixées au stator et la carcasse par l'intermédiaire de deux blocs de fixation, et cette liaison rigide a une longueur fixe ou réglable.

Selon une autre caractéristique de l'invention, chaque articulation comprend au moins un élément élastique solidaire d'un arbre, les deux arbres des deux articulations étant parallèles l'un à l'autre suivant l'axe X-X précité.

A titre d'exemple, chaque élément élastique est constitué par un manchon coaxial à l'arbre associé et monté autour de ce dernier.

Selon un premier mode de réalisation :
- la liaison rigide comprend deux bras parallèles s'étendant suivant l'axe Y-Y précité, et
- les deux bras de la liaison rigide relient respectivement les premières extrémités et les secondes extrémités des arbres des deux articulations pour former globalement un quadrilatère.

Selon un deuxième mode de réalisation qui est une variante du précédent, le manchon qui constitue chaque élément élastique est emprisonné entre deux douilles métalliques.

Selon un troisième mode de réalisation :
- les deux éléments élastiques d'une biellette sont chacun solidaires extérieurement d'une douille métallique, et les deux douilles sont reliées l'une à l'autre par la liaison rigide, et
- les deux arbres associés aux deux éléments élastiques sont respectivement reliés aux blocs de fixation par des bras rigides.

D'une manière générale, chaque biellette du système de suspension est monté entre le stator et la carcasse, de manière à ce que les deux arbres des deux articulations s'étendent parallèlement à une génératrice du stator.

Concrètement, chaque élément élastique de la biellette pourra se déformer par torsion autour de l'axe X-X en présentant une faible raideur, alors qu'il pourra se déformer par compression suivant l'axe Y-Y mais en présentant une raideur plus importante.

Ainsi, grâce à cette anisotropie des raideurs de chaque biellette suivant deux axes perpendiculaires, le système de suspension selon l'invention présente des avantages parmi lesquels il faut notamment citer :
- une atténuation des bruits et vibrations engendrés par les efforts dynamiques du stator grâce à une faible raideur de chaque biellette autour de l'axe X-X,
- une reprise des efforts statiques au niveau du stator grâce à une raideur plus importante de chaque biellette suivant l'axe Y-Y perpendiculaire à l'axe X-X,
- un rattrapage possible de la flèche statique due au poids du stator grâce à la longueur réglable de la liaison rigide entre les deux arbres des deux articulations, réglage qui peut être effectué sans procéder à aucune opération de démontage préalable,
- des biellettes dont l'élément élastique peut être fabriqué à un faible coût, qui ne présentent pas un encombrement trop important, et dont le montage ne pose pas de problème particulier.

D'autres avantages, caractéristiques et détails de l'invention ressortiront du complément de description qui va suivre en référence aux dessins annexés, donnés uniquement à titre d'exemple et dans lesquels :
- la figure 1 est une vue en coupe partielle et schématique d'une machine électrique tournante équipée d'un système de suspension selon l'invention,
- la figure 2 est une vue en coupe partielle d'une biellette du système de suspension selon un premier mode de réalisation de l'invention,
- la figure 3 est une vue en coupe avec arrachements partiels d'une biellette de suspension selon un deuxième mode de réalisation de l'invention, et
- la figure 4 est une vue en coupe partielle d'une biellette de suspension selon un troisième mode de réalisation de l'invention.

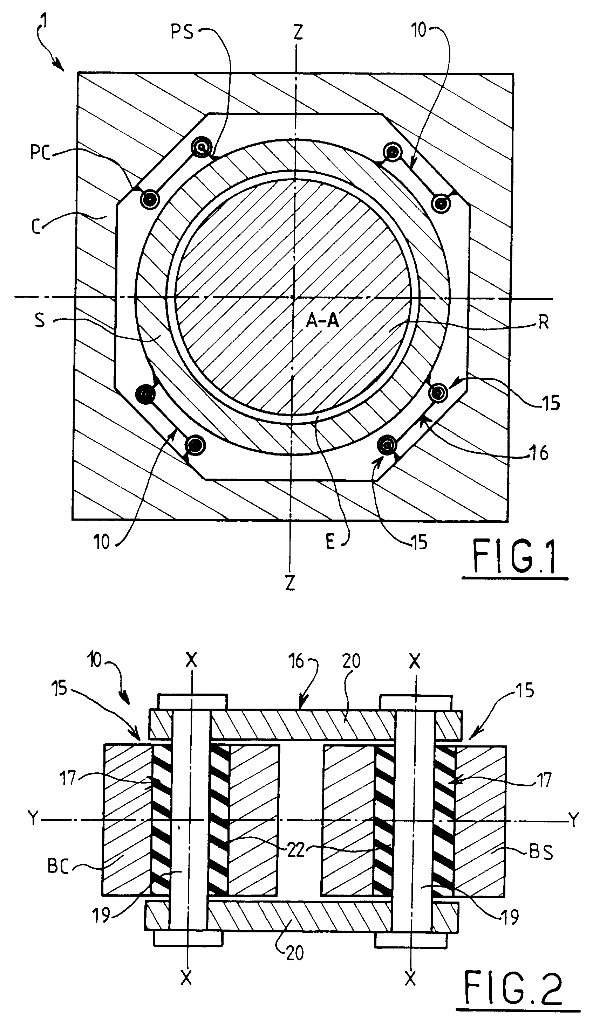

Comme illustré sur la figure 1, une machine électrique tournante 1 comprend, d'une façon connue en soi, un stator S, un rotor R monté coaxialement à l'intérieur du stator S et délimitant entre eux un entrefer E, et une carcasse ou carter C qui entoure le stator S. Le rotor est supporté en rotation par des paliers (non représentés), alors que le stator S est suspendu à la carcasse C au moyen d'un système de suspension selon l'invention.

Sur cette figure 1, on suppose que l'axe de rotation A-A du rotor R est situé dans un plan sensiblement horizontal, par exemple.

Le système de suspension comprend plusieurs dispositifs dénommés ci-après biellettes 10 qui sont montées entre la carcasse C et le stator S. Dans l'exemple illustré sur la figure 1, quatre biellettes ont été représentées, sachant que leur nombre est au moins égal à trois et qu'elles peuvent être ou non régulièrement espacées autour du stator S. Chaque biellette 10 est fixée au stator S en un point PS d'une part et à la carcasse C en un point PC d'autre part.

Une biellette 10 est illustrée sur la figure 2 et comprend deux articulations 15 reliées entre elles par une liaison rigide 16. Chaque articulation 15 comprend au moins un élément élastique 17 qui présente une faible raideur autour d'un axe X-X et une raideur plus importante suivant un axe Y-Y perpendiculaire à l'axe X-X. Concrètement, l'axe X-X est matérialisé au niveau de chaque articulation 15 par un arbre 19. Les deux arbres 19 des deux articulations 15 de chaque biellette 10 sont parallèles l'un à l'autre suivant cet axe X-X. La liaison rigide 16 comprend deux bras parallèles 20 suivant l'axe Y-Y qui relient solidairement et respectivement les premières extrémités et les secondes extrémités des deux arbres 19 en formant globalement un quadrilatère.

D'une manière générale, l'élément élastique 17 de chaque articulation 15 est un support fabriqué en matériau élastomère, comme du caoutchouc par exemple, ou tout autre matériau qui lui confère des caractéristiques de raideur anisotropes autour de l'axe X-X et suivant l'axe Y-Y. Autrement dit, ce matériau doit présenter une faible raideur radiale autour de l'axe X-X pour être souple en torsion, et une raideur tangentielle plus importante suivant l'axe Y-Y pour être rigide en compression.

Chaque élément élastique 17 d'une biellette 10 est solidaire de l'arbre 19 associé d'une part, et d'un bloc BS (côté stator) et BC (côté carcasse) pour fixer la biellette 10.

Selon un premier mode de réalisation illustré sur la figure 2, chaque élément élastique 17 est constitué par un manchon 22 par exemple, solidaire de l'arbre 19 associé ou dans lequel est emmanché à force l'arbre 19 associé. L'arbre 19 fait avantageusement saillie au delà des deux extrémités du manchon 22 pour permettre sa liaison avec les deux bras rigides 20.

Les deux articulations 15 sont respectivement fixées au stator S et à la carcasse C au moyen des deux blocs de fixation BS et BC.

A titre d'exemple, chaque manchon 22 est solidaire ou monté à force dans le bloc de fixation associé BS ou BC, et ce dernier est fixé au stator S ou à la carcasse C par des moyens de fixation classiques tels que des vis et/ou des boulons par exemple.

En se reportant à nouveau à la figure 1, le système de suspension comprend quatre biellettes 10 disposées symétriquement de part et d'autre d'un plan axial passant par un axe vertical Z-Z et l'axe horizontal A-A du rotor R. Chaque biellette 10 est montée de manière à ce que les axes X-X des articulations 15 s'étendent parallèlement à une génératrice du stator S, et en ce que l'axe Y-Y des bras 20 de chaque biellette 10 soit tangent au stator S.

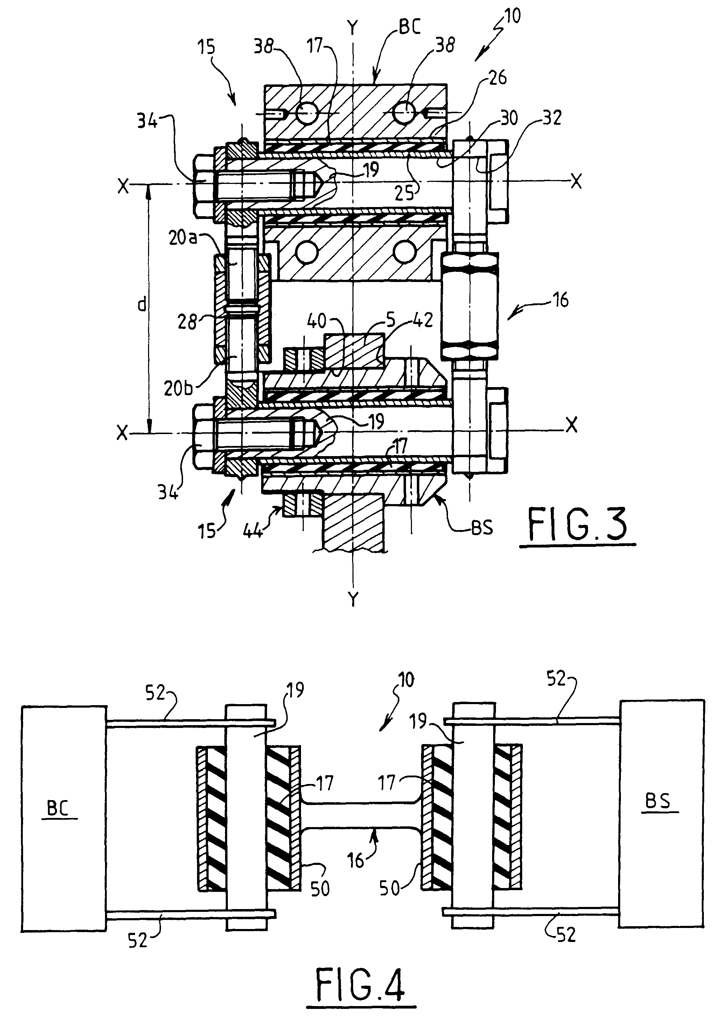

Selon un deuxième mode de réalisation illustré sur la figure 3, le manchon 22 qui forme chaque élément élastique 17 d'une biellette 10 est inséré entre deux douilles métalliques interne 25 et externe 26. Chaque arbre 19 associé à chaque articulation 15 est par exemple emmanché à force dans la douille interne 25.

Dans ce deuxième mode de réalisation, la liaison rigide 16 entre les deux arbres 19 de chaque biellette 10 est de longueur réglable de manière à pouvoir ajuster la distance d séparant les deux arbres 19, c'est-à-dire de manière à pouvoir régler l'entrefer E et la coaxialité entre le stator S et le rotor R.

A titre d'exemple, chaque bras 20 de la liaison rigide 16 est constitué de deux demi-bras 20a axialement alignés l'un avec l'autre et dont les extrémités adjacentes sont filetées extérieurement de manière à pouvoir s'engager plus ou moins à l'intérieur d'une douille taraudée 28.

Dans ce deuxième mode de réalisation, on a illustré les deux blocs de fixation BS et BC de fixation d'une biellette 10 au stator S et à la carcasse C.

Le bloc de fixation BC est traversé de part en part par un passage 30 dans lequel vient s'emmancher à force la douille externe 26 de l'une des articulations 15 de la biellette 10. L'arbre 19 associé à cette articulation 15 fait saillie de part et d'autre du bloc de fixation BC, et une extrémité de chaque bras 20 de la liaison rigide 16 présente un trou 32 pour permettre le passage de l'arbre 19. Chaque bras 20 est ensuite fixé rigidement au moyen d'une vis 34 qui est vissée dans un trou borgne taraudé 36 percé axialement à chaque extrémité de l'arbre 19. Le bloc de fixation BC est fixé à la carcasse C au moyen de quatre vis par exemple, vissées dans quatre trous 38 percés dans le bloc BC suivant un axe perpendiculaire au passage central 30.

Vers sa périphérie, le stator S est percé d'un orifice 40 dans lequel vient se monter le bloc de fixation BS. D'un côté, le bloc de fixation BS vient en appui par un épaulement 42 contre le stator S, alors que de l'autre côté le bloc de fixation BS est maintenu en place par l'intermédiaire de vis 44.

Dans les deux modes de réalisations précités, les deux éléments élastiques 17 d'une biellette 10 sont indirectement reliés l'un à l'autre, par l'intermédiaire des deux arbres 19, aux deux bras 20 de la liaison rigide 16 en formant globalement un quadrilatère.

Selon un troisième mode de réalisation illustré sur la figure 4, les deux manchons 22 qui constituent les deux éléments élastiques 17 d'une biellette 10 sont chacun solidaires extérieurement d'une douille métallique 50, et les deux douilles 50 sont reliées l'une à l'autre par une liaison rigide 16 de longueur fixe ou variable.

Par contre, les deux arbres 19 associés avec deux éléments élastiques 17 sont respectivement reliés aux blocs de fixation BS côté stator et BC côté carcasse, par des bras rigides 52.

Quel que soit le mode de réalisation, chaque élément de fixation 17 va notamment travailler en torsion lorsqu'il est soumis à des efforts autour de l'axe X-X, et en compression lorsqu'il est soumis à des efforts suivant l'axe Y-Y.

La déformation en torsion de chaque élément élastique 17 va permettre d'atténuer les bruits et les vibrations engendrées par les efforts dynamiques auxquels est soumis le stator S en cours de fonctionnement, ces efforts ayant notamment tendance à exciter en vibration le stator S suivant ses modes propres.

Parallèlement, les efforts statiques ou de couple auxquels le stator S est soumis seront repris par la déformation en compression des éléments élastiques 17.

Bien entendu, l'invention ne se limite pas aux trois modes de réalisation illustrés précédemment et donnés uniquement à titre d'exemple. En particulier, chaque élément élastique d'une biellette n'a pas nécessairement la forme d'un élément tubulaire, dès l'instant où cet élément élastique présente deux raideurs différentes suivant deux axes perpendiculaires, c'est-à-dire qu'il respecte ce critère d'anisotropie.

## Revendications

1. Système de suspension d'un stator de machine électrique tournante, cette machine comprenant un rotor (R) et un stator (S) coaxiaux qui délimitent entre eux un entrefer (E), et une carcasse (C) à laquelle est suspendu le stator (S), caractérisé en ce que le système de suspension comprend plusieurs biellettes (10), chaque biellette (10) comprenant au moins un élément élastique (17) qui présente une raideur tangentielle importante suivant un axe (Y-Y) tangent au stator (S), et une faible raideur radiale autour d'un axe (X-X) qui est parallèle à une génératrice du stator (S).

2. Système de suspension selon la revendication 1, caractérisé en ce que chaque biellette (10) comprend au moins deux articulations (15) reliées entre elles par une liaison rigide (16) et qui sont respectivement fixées au stator (S) et la carcasse (C) par l'intermédiaire de deux blocs de fixation (BS,BC).

3. Système de suspension selon la revendication 2, caractérisé en ce que la liaison rigide (16) a une longueur fixe ou réglable.

4. Système de suspension selon la revendication 2 ou 3, caractérisé en ce que chaque articulation (15) comprend au moins un élément élastique (17) solidaire d'un arbre (19), les deux arbres (19) des deux articulations (15) étant parallèles l'un à l'autre suivant l'axe (X-X) précité.

5. Système de suspension selon la revendication 4, caractérisé en ce que chaque élément élastique (17) est constitué par un manchon (22) coaxial à l'arbre associé (19) et monté autour de ce dernier.

6. Système de suspension selon la revendication 3, 4 ou 5, caractérisé en ce que la liaison rigide (16) comprend deux bras parallèles (20) s'étendant suivant l'axe (Y-Y) précité.

7. Système de suspension selon la revendication 6, caractérisé en ce que les deux bras (20) de la liaison rigide (16) relient respectivement les premières extrémités et les secondes extrémités des arbres (19) pour former globalement un quadrilatère.

8. Système de suspension selon la revendication 7, caractérisé en ce que le manchon (22) est emprisonné entre deux douilles métalliques (25,26).

9. Système de suspension selon l'une quelconque des revendications 1 à 5, caractérisé en ce que les deux éléments élastiques (17) d'une biellette (10) sont chacun solidaires extérieurement d'une douille métallique (50), et en ce que les deux douilles (50) sont reliées l'une à l'autre par la liaison rigide (16).

10. Système de suspension selon la revendication 9, caractérisé en ce que les deux arbres (19) associés aux deux éléments élastiques (17) sont respectivement reliés aux blocs de fixation (BS,BC) par des bras rigides (52).

11. Système de suspension selon l'une quelconque des revendications précédentes, caractérisé en ce que les liaisons élastiques (17) sont constituées en un matériau présentant des raideurs différentes suivants les axes (X-X,Y-Y), ce matériau étant un matériau élastomère par exemple.
